Europäisches Patentamt

European Patent Office

Office européen des brevets

(19)

(11) Publication number: **0 035 519**
**B1**

(12) **EUROPEAN PATENT SPECIFICATION**

(45) Date of publication of patent specification: **11.04.84**

(51) Int. Cl.³: **F 16 L 19/08**

(21) Application number: **80901699.1**

(22) Date of filing: **28.08.80**

(86) International application number:
**PCT/NO80/00027**

(87) International publication number:
**WO 81/00747 19.03.81 Gazette 81/7**

(54) **A TUBE COUPLING.**

(30) Priority: **11.09.79 NO 792943**

(43) Date of publication of application:
**16.09.81 Bulletin 81/37**

(45) Publication of the grant of the patent:
**11.04.84 Bulletin 84/15**

(84) Designated Contracting States:
**FR**

(56) References cited:
**US - A - 2 405 822**
**US - A - 2 465 972**
**US - A - 2 508 914**
**US - A - 3 423 111**
**US - A - 3 815 940**
**US - A - 4 005 883**
**US - A - 4 178 023**

(73) Proprietor: **A/S RAUFOSS
AMMUNISJONSFABRIKKER
N-2830 Raufoss (NO)**

(72) Inventor: **RAKNES, Nils
Hareveien 9
N-2830 Raufoss (NO)**

(74) Representative: **Bressand, Georges et al,
c/o CABINET LAVOIX 2 Place d'Estienne d'Orves
F-75441 Paris Cedex 09 (FR)**

Courier Press, Leamington Spa, England.

## A tube coupling

The present invention relates to a tube coupling, said coupling comprising a gripper ring for the tube, a one-piece or divisible nipple and a sealing ring, preferably an O-ring, said gripper ring being adapted to be located axially outside of the sealing ring and having an external conical surface adapted to cooperate with a complementary conical surface inside the nipple or inside an attached element of the nipple, in order to cause compression of the gripper ring.

A tube coupling of this kind is known from US—A—3 815 940. The gripper ring is split, and cooperates with a conical surface inside the nipple, which is not divisible. Therefore, the gripper ring must be able to be substantially deformed in order to be placed inside the nipple. Another possibility is to use a separate element, for instance some kind of nut which is attached after the gripper ring has been brought into place.

Said known gripper ring has an axially innermost edge which is bevelled externally in order to permit the O-ring to be pressed into the thereby defined annular groove when the pressure inside the coupling is extremely high.

Said type of couplings is adapted to be used in such a manner that a tube or hose is introduced into the coupling after the O-ring and the gripper ring have been brought into place inside the nipple, possibly inside an attached element of the nipple. The locking of the tube or hose is achieved by means of the gripper ring which sufficiently grips around the tube or hose to ensure that the gripper ring will move axially with the tube or hose. Thus, when the coupling and the tube are pressurized for the first time after the mounting of the tube, or the coupling and the tube are subjected to an axial, mechanical force tending to separate those parts, the tube and the gripper ring will move slightly axially outwardly relatively to the nipple and the gripper ring will be further compressed around the tube when the gripper ring enters the conical surface in the nipple or in the attached element thereof. In some applications of such couplings it is of vital importance that the tube be gripped and held safely in place by means of the gripper ring and that a proper sealing be achieved by means of the O-ring (or a sealing ring having another cross-sectional shape), and as far as the mounting of the tube in the nipple is concerned, it is desirable that the resistance to the mounting be as small as possible, because in some applications there may be a very small working space, and moreover the tubes may bend during the attempt to mount them. An example of an application where the gripping, the sealing and the small resistance to the mounting of tubes or hoses are very important is brake systems for large vehicles, such as trucks and buses, in which the number of couplings may be more than 100 per vehicle. The nipples, having their O-ring and gripper ring properly positioned and having their possible attached element properly fastened, said element being for instance a nut having an inner conical surface, are fastened at the proper locations on the vehicle, whereafter tubes or hoses of proper lengths and possibly bent to the desired shape, are mounted by forcing them into the nipples until their ends abut shoulders in the bores of the nipples or until a mark on the tubes or hoses is no longer visible, so as to ensure that the tubes or hoses have been moved sufficiently into the nipples. Such a procedure of mounting the tubes is very simple and time-saving compared with the tightening of each nut after the tubes or hoses have been moved into the nipples, and moreover there is avoided a more or less random tightening with respect to the torque applied, or a time-consuming tightening with the use of a torque-applying wrench, because the tightening, by use of said type of couplings, is ensured in the course of the manufacture of the coupling parts.

Said type of couplings has, however, caused certain problems, and in particular when being used together with plastic tubes. Even when the tubes are reinforced they have a tendency to collapse or cave in during long-lasting strain. In couplings of said type, the tube is subjected to an external pressure from the sealing ring. The pressure is necessary to ensure sealing and must in some applications be rather high. In order to achieve this, the sealing ring must have an opening which, in the non-expanded condition, is relatively much smaller than the outer dimension of the tube, thus causing the sealing ring to contract as the diameter of the tube is gradually reduced because of the collapse. However, the relatively small diameter of the opening in the ring more or less resists the mounting of the tube. One way of avoiding this is to taper the end of the tube, but it is desirable to avoid the resulting increased costs.

The gripper ring also produces resistance to the mounting of the tube. Although it is usual that the gripper ring be tapered on its axially outermost end, as shown in said US patent, this is not sufficient to ensure that the mounting can be carried out with as small a resistance as desired, and particularly not when the gripper ring is adapted to exert a relatively high pressure on the tube.

US—A—2 465 972 also discloses a tube coupling comprising in a nipple structure a sealing ring and a gripper ring having an outer conical surface engaging an element of the nipple structure. The inner surface of the gripper ring adjacent to the tube is also conical and the axially innermost end of the gripper ring relative to the nipple structure is tapered. The axial movement of the element of the nipple structure causes the sealing ring and gripper ring to be pressed together and urges the gripper ring against the tube.

US—A—3 423 111 discloses a tube coupling in which a gripper ring has a conical outer surface engaging a conical surface on a sleeve and a conical inner surface and a tapered end which is axially innermost relative to the sleeve.

The two last-mentioned patents disclose tube couplings which are of the same general type as the coupling of the present invention as concerns the action of a gripper ring for preventing extraction of the tube from the coupling and the sealing action of a sealing ring adjoining the gripper ring. However, these couplings are in no way designed to facilitate the insertion of the tube in the coupling, and more precisely in the sealing ring, when assembling the coupling.

The main object of the present invention is to ensure a reduced resistance to the insertion of the tube in the coupling. From the above example of application in the brake system of a vehicle it will be apparent that such an improvement is highly desirable.

The invention therefore provides a tube coupling having a split gripper ring, said coupling comprising a single-piece or divisible nipple and a sealing ring (2) for sealingly gripping round the tube, said gripper ring having a first radially outer conical surface adapted to cooperate with a complementary conical surface inside the nipple or inside an attached element (4) of the nipple, the gripper ring (3) having a radially inner conical surface substantially throughout its entire length and an axially innermost end portion of the gripper ring having a second radially outer conical surface tapering in a direction opposed to that of said first outer conical surface, characterised in that said two outer conical surfaces make therebetween an obtuse angle, said innermost end portion is tapered at an acute angle, and that part of the sealing ring adjacent to the gripper ring is configured to provide an annular entrance recess defined between the sealing ring and the tube to facilitate the entry of said inner end portion between the sealing ring (2) and the tube (5) to enable said inner end portion to expand the sealing ring radially under the axial thrust exerted on the gripper ring by the tube (5) as the latter is mounted by axial movement.

A further problem relates to the manufacture of the gripper rings, in cases when it is necessary to provide a surface layer in order to increase the resistance to corrosion. The most advantageous method of surface treatment, from the view point of corrosion resistance and economy, is the use of electric current, and by the use of such a method it has been found necessary to tumble the gripper rings, i.e. to place the rings in a rotatable container, in order to ensure that the surface treatment take place on the entire surface. During the tumbling the rings will rub against each other, and it is of great importance to ensure that the sharp edge of the gripper ring intended to be forced into the tube wall is not blunted. An embodiment of the present invention provides a solution of this problem.

According to this embodiment, the conical inner surface of the gripper ring ends at a slight distance from the axially innermost end of the gripper ring so as to form a tube-contacting edge which is set axially back from the innermost end of the gripper ring and is thereby protected against damage.

The invention will be described in more detail hereinafter, with reference to two embodiments shown in the accompanying drawing.

Fig. 1 shows a tube coupling according to the present invention which comprises a nipple having an attached element, a sealing ring and a gripper ring.

Fig. 2 shows another embodiment of a tube coupling according to the invention.

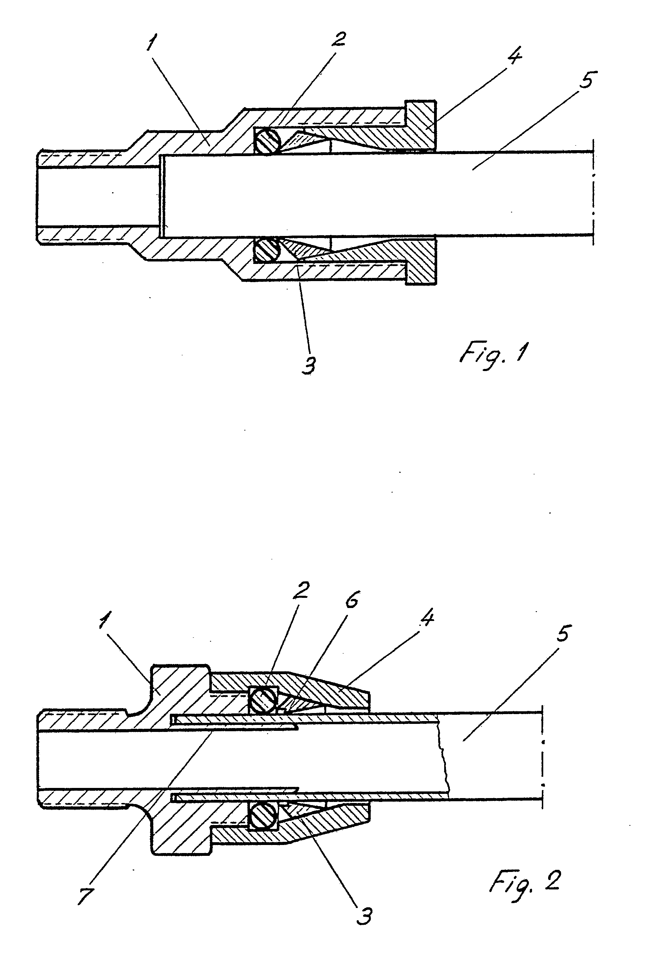

The tube coupling shown in Fig. 1 comprises a nipple 1 having an attached element 4 in the form of a nut, an O-ring 2 and a gripper ring 3. Also shown is the end of a tube 5 mounted in the nipple 1.

The gripper ring 3 has a conical inner surface, the largest inner diameter of the ring facing outwardly of the nipple 1, and the gripper ring is tapered towards the O-ring 2, the apex angle of the tapered end being substantially larger than that of said inner surface, whereby a sharp edge is defined between the conical inner surface and the tapered end. Moreover, the gripper ring has a third conical, outer surface, adapted to cooperate with a complementary conical surface in the attached element 4 of the nipple.

When the attached element 4 has been screwed into the main part of the nipple 1 and tightened, there is still a space to permit a certain axial movement of the gripper ring 3. The gripper ring 3 is split, and the conical inner surface thereof will permit entering of the tube 5. When the tube is moved axially inwardly the gripper ring will be pressed axially towards and against the O-ring 2, and the tapered surface facing the O-ring will cause expansion of the O-ring, which in its relaxed condition has a somewhat smaller inner diameter than the outer diameter of the tube. The inner conical surface of the gripper ring has a small apex angle and produces a very small resistance to the movement of the tube.

After the tube has been mounted any small axial movement of the tube outwardly will cause the gripper edge of the gripper ring 3 to clamp the tube, because the gripper ring will be compressed when being moved axially outwardly relatively to the attached element 4. Simultaneously the expansion of the O-ring caused by the gripper ring will cease, and the O-ring will press against the tube with its full sealing force.

Fig. 2 shows an embodiment of the gripper ring 3 where the gripper edge 6 is situated at a slight distance from the axially innermost end of the ring. Thereby, the edge is protected against damage and blunting, as for instance during said tumbling of the surface treatment.

Moreover, the coupling shown in Fig. 2 is somewhat different from that of Fig. 1, in that the attached element 4 is a nut and screwed on external threads on the main part of the nipple 1, said element having an inner groove which receives the O-ring 2. Further, the nipple 1 comprises a sleeve-like part 7, which upon the mounting of the tube is situated inside the tube and prevents radial compression of the tube. By this embodiment the gripper ring 3 is placed in the attached element 4, whereupon the O-ring 2 is placed in its groove. Thereby, the gripper ring is prevented from falling out of the element 4 before the element 4 is screwed on the nipple part 1. In the shown embodiment, the groove for the O-ring is shallow, and when the nipple part 1 and the element 4 have been screwed together a shoulder inside the nipple part 1 forms the major part of the abutment for the O-ring.

It will be appreciated that a gripper ring according to the present invention may be applied in different kinds of couplings as far as different combinations of a nipple main part and an attached element thereof are concerned. The only necessary features in this respect are that the nipple, possibly comprising an attached element, define a space for the gripper ring and a sealing ring, and that there exist an inner conical surface adapted to cooperate with an outer conical surface of the gripper ring.

It will also be appreciated that the apex angles may be different from what is shown. In the illustrated embodiments, the inner apex angle of the gripper ring is rather small, and it may be desirable to use an increased apex angle in order to ensure that the gripper edge is forced sufficiently into the tube wall. There will still be ensured a small resistance to the mounting of the tube compared with the use of prior art gripper rings, said prior art rings usually having a tapering for the entering of the tube of about 45°, i.e. an apex angle of about 90°. A suitable inner apex angle of a gripper ring in accordance with the present invention may for instance be about 30°.

Moreover, it will be appreciated that the nipple may be constructed mainly as shown in the above-mentioned US—A—3 815 940, i.e. having a conical element formed integrally with the main part of the nipple.

## Claims

1. A tube coupling having a split gripper ring, said coupling comprising a single-piece or divisible nipple and a sealing ring (2) for sealingly gripping round the tube, said gripper ring having a first radially outer conical surface adapted to cooperate with a complementary conical surface inside the nipple or inside the attached element (4) of the nipple, the gripper ring (3) having a radially inner conical surface substantially throughout its entire length and an axially innermost end portion of the gripper ring having a second radially outer conical surface tapering in a direction opposed to that of said first outer conical surface, characterised in that said two outer conical surfaces make therebetween an obtuse angle, said innermost end portion is tapered at an acute angle, and that part of the sealing ring adjacent to the gripper ring is configured to provide an annular entrance recess defined between the sealing ring and the tube to facilitate the entry of said inner end portion between the sealing ring (2) and the tube (5) to enable said inner end portion to expand the sealing ring radially under the axial thrust exerted on the gripper ring by the tube (5) as the latter is mounted by axial movement.

2. A coupling according to claim 1, characterised in that the ring is of triangular cross-section with the tube-contacting edge located at the axially innermost end of the gripper ring (3).

3. A coupling according to claim 1, characterised in that the conical inner surface ends at a slight distance from the axially innermost end of the gripper ring so as to form a tube-contacting edge (6) which is set axially back from the innermost end of the gripper ring and is thereby protected against damage.

4. A coupling according to claim 1, 2 or 3, characterised in that said sealing ring (2) is an O-ring.

5. A coupling according to any one of the preceding claims, characterised in that the apex angle of the cone of the inner conical surface is substantially 30°.

## Patentansprüche

1. Rohrkupplung mit geteiltem Klemmring, wobei die Kupplung einen einstückigen oder teilbaren Nippel und einen Dichtring (2) zum dichten Umgreifen des Rohrs aufweist, der Klemmring eine erste, radial äußere konische Fläche zum Zusammenwirken mit einer komplementären konischen Fläche im Nippel oder in einem am Nippel befestigten Element (4) aufweist, der Klemmring (3) eine radial innere konische Fläche im wesentlichen über seine Gesamtlänge aufseist und ein in Axialrichtung zuinnerst befindlicher Endabschnitt des Klemmrings eine zweite radial äußere konische Fläche aufweist, die sich entgegengesetzt zu der Richtung der ersten äußeren konischen Fläche verjüngt, dadurch gekennzeichnet, daß die beiden äußeren konischen Flächen zwischen sich einen stumpfen Winkel bilden, daß der am weitesten innen befindliche Endabschnitt sich unter einem spitzen Winkel verjüngt, und daß der an den Klemmring angrenzende Teil des Dichtrings so ausgebildet ist, daß eine ringförmige Einführungsausnehmung zwischen dem Dichtring und dem Rohr gebildet ist, um die Einführung des inneren Endabschnitts zwischen den Dichtring (2) und das Rohr (5) zu erleichtern, so daß der innere Endabschnitt den Dichtring aufgrund das Axialdrucks, den das Rohr (5) bei Montage durch axiales Verschieben auf den Klemmring ausübt, aufweitet.

2. Rohrkupplung nach Anspruch 1, dadurch gekennzeichnet, daß der Ring Dreiecksquerschnitt hat, wobei sein das Rohr kontaktierender Rand an dem in Axialrichtung innersten Ende des Klemmrings (3) positioniert ist.

3. Rohrkupplung nach Anspruch 1, dadurch gekennzeichnet, daß die konische Innenfläche mit geringem Abstand vor dem in Axialrichtung innersten Ende des Klemmrings endet, so daß ein das Rohr kontaktierender Rand (6) gebildet ist, der vom innersten Ende des Klemmrings in Axialrichtung zurückgesetzt und dadurch gegen Beschädigung geschützt ist.

4. Rohrkupplung nach Anspruch 1, 2 oder 3, dadurch gekennzeichnet, daß der Dichtring (2) ein O-Dichtring ist.

5. Rohrkupplung nach einem der vorhergehenden Ansprüche, dadurch gekennzeichnet, daß der Spitzenwinkel des Konus der inneren konischen Fläche im wesentlichen 30° beträgt.

**Revendications**

1. Un accouplement du tube ayant une bague de serrage fendue, cet accouplement comprenant un raccord en une seule pièce ou divisible et une bague d'étanchéité (2) pour réaliser un serrage étanche autour du tube, la bague de serrage ayant une première surface radialement extérieure, conique, adaptée pour coopérer avec une surface conique complémentaire à l'intérieur du raccord ou à l'intérieur d'un élément (4) rattaché au raccord, la bague de serrage (3) ayant une surface radialement intérieure, conique pratiquement d'un bout à l'autre de sa longueur et une portion terminale axialement la plus intérieure de la bague de serrage ayant une seconde surface radialement extérieure, conique, se rétrécissant dans une direction opposée à celle de la première surface radialement extérieure, conique, caractérisé en ce que lesdites deux surfaces extérieures coniques font entre elles un angle obtus, ladite portion terminale la plus intérieure est taillée en cône sous un angle aigu et la partie de la bague d'étanchéité (2) adjacente à la bague de serrage (3) est configurée de façon à fournir un évidement d'entrée annulaire délimité entre la bague d'étanchéité (2) et le tube (5) pour faciliter l'entrée de la portion terminale intérieure entre la bague d'étanchéité (2) et le tube (5) afin de permettre à cette portion terminale intérieure d'élargir la bague d'étanchéité (2) radialement sous la poussée axiale exercée sur la bague de serrage (3) par le tube (5) quand celui-ci est monté par mouvement axial.

2. Un accouplement suivant la revendication 1, caractérisé en ce que la bague de serrage (3) a une section droite de forme triangulaire, le bord de contact avec le tube étant situé à l'extrémité axialement la plus intérieure de la bague de serrage (3).

3. Un accouplement suivant la revendication 1, caractérisé en ce que la surface intérieure conique se termine à une petite distance de l'extrémité axialement la plus intérieure de la bague de serrage de manière à former un bord (6) de contact avec le tube qui soit disposé en arrière de l'extrémité la plus intérieure de la bague de serrage et soit ainsi protégé contre les détériorations.

4. Un accouplement suivant la revendication 1, 2 ou 3, caractérisé en ce que ladite bague d'étanchéité (2) est un joint torique.

5. Un accouplement suivant l'une des revendications précédentes, caractérisé en ce que l'angle au sommet du cône de la surface conique intérieure est approximativement de 30°.

Fig. 1

Fig. 2